# DEMANDE DE BREVET EUROPEEN

(11) **EP 3 299 907 A1**
(43) Date de publication de la demande: **28.03.2018**
(21) Numéro de dépôt: 17174621.7
(22) Date de dépôt: 27.08.2014
(51) Int. Cl.: G04C 5/00, G04B 17/32, G04B 37/02

(54) **MOUVEMENT HORLOGER MÉCANIQUE À ÉCHAPPEMENT MAGNÉTIQUE**

(62) Demande divisionnaire de: 14182532.3
(71) Demandeur: ETA SA Manufacture Horlogère Suisse, 2540 Grenchen (CH)
(72) Inventeur: Winkler, Pascal, 2072 St-Blaise (CH); Helfer, Jean-Luc, 2525 Le Landeron (CH); Conus, Thierry, 2543 Lengnau (CH); Di Domenico, Gianni, 2000 Neuchâtel (CH); Born, Jean-Jacques, 1110 Morges (CH)
(74) Mandataire: ICB SA

(57) **Abrégé**

Le mouvement horloger mécanique (152) comprend un résonateur, un échappement associé à ce résonateur et un affichage d'au moins une information temporelle, cet affichage étant entraîné par un dispositif moteur mécanique via un rouage compteur dont la marche est cadencée par l'échappement qui comprend une roue d'échappement (158) et un arrêtoir (160). L'arrêtoir a une première partie (170) qui est couplée au résonateur via un système de couplage magnétique et une deuxième partie, distincte de la première partie, qui est couplée à la roue d'échappement, le système de couplage magnétique étant formé d'un premier aimant (170), de forme oblongue, porté par la première partie de l'arrêtoir et d'un deuxième aimant (198) porté par le résonateur. Les premier et deuxième aimants sont agencés pour présenter entre eux au moins périodiquement une interaction magnétique en attraction lorsque le résonateur oscille.

## Description

### Domaine technique

La présente invention concerne un mouvement horloger mécanique équipé d'un dispositif régulateur de sa marche formé par un résonateur associé à un échappement. Par échappement, on comprend dans le domaine horloger un système formé par un mécanisme d'entretien de l'oscillation du résonateur et par un mécanisme de comptage de cette oscillation pour cadencer l'entraînement d'un affichage d'au moins une information temporelle. Le résonateur et le mécanisme d'entretien de son oscillation définissent ensemble un oscillateur. On notera que généralement le mécanisme d'entretien et le mécanisme de comptage sont formés par un seul et même mécanisme de distribution de l'énergie, fournie par un dispositif moteur, qui assure les deux fonctions.

En général, la présente invention s'intéresse à augmenter le facteur de qualité du dispositif régulateur pour améliorer la précision de la marche du mouvement horloger mécanique, notamment d'améliorer l'isochronisme de l'oscillateur et aussi de diminuer la puissance dissipée par le dispositif régulateur.

En particulier, la présente invention concerne le couplage entre une roue d'échappement et le résonateur par l'intermédiaire d'un arrêtoir.

### Arrière-plan technologique

Pour augmenter le facteur de qualité d'un dispositif régulateur d'un mouvement horloger, il a déjà été proposé de diminuer des frottements de l'air sur le résonateur.

### Résumé de l'invention

La présente invention a pour but de résoudre les problèmes de l'art antérieur pour les montres équipées d'un mouvement mécanique dans lesquelles il est prévu d'augmenter le facteur de qualité de l'oscillateur.

A cet effet, la présente invention a pour objet un mouvement horloger mécanique comprenant un résonateur, un échappement associé à ce résonateur et un affichage d'au moins une information temporelle, cet affichage étant entraîné par un dispositif moteur mécanique via un rouage compteur dont la marche est cadencée par l'échappement qui comprend une roue d'échappement et un arrêtoir. La présente invention est remarquable en ce que l'échappement définit un échappement magnétique, l'arrêtoir ayant une première partie qui est couplée au résonateur via un système de couplage magnétique et une deuxième partie, distincte de la première partie, qui est couplée à la roue d'échappement, le système de couplage magnétique étant formé d'un premier élément magnétique porté par la première partie de l'arrêtoir et d'un deuxième élément magnétique porté par le résonateur. Les premier et deuxième éléments magnétiques sont agencés pour présenter entre eux au moins périodiquement une interaction magnétique en attraction lorsque le résonateur oscille, le système de couplage magnétique étant agencé pour permettre une oscillation de l'arrêtoir de manière synchrone avec le résonateur entre deux positions d'arrêt dans lesquelles cet arrêtoir est maintenu alternativement durant respectivement une première partie et une deuxième partie de chaque alternance de l'oscillation du résonateur.

Par échappement magnétique, on comprend un échappement dont au moins deux de ses organes sont couplés magnétiquement sans contact.

Selon un mode de réalisation particulier, le deuxième élément magnétique est formé par une cheville magnétique agencée de manière décentrée relativement à un axe géométrique d'oscillation du résonateur.

Selon une variante préférée, le premier élément magnétique présente, dans un plan général perpendiculaire à l'axe géométrique d'oscillation, une forme oblongue configurée pour permettre, dans chaque alternance de l'oscillation du résonateur, ladite interaction magnétique en attraction dans une zone de couplage magnétique située autour d'une position de repos du résonateur.

Selon d'autres aspects spécifiques du mode de réalisation particulier, le premier élément magnétique est formé par un aimant oblong et le résonateur comprend en outre un disque central qui est aimanté en répulsion relativement à cet aimant oblong. Le disque central aimanté est agencé de manière à maintenir, par la répulsion magnétique avec l'aimant oblong, l'arrêtoir alternativement dans ses deux positions d'arrêt. De plus, le disque central aimanté présente à sa périphérie une encoche qui est sensiblement alignée sur un axe de référence passant par le centre de la cheville magnétique et l'axe géométrique d'oscillation, l'encoche permettant à l'aimant oblong de pénétrer partiellement dans cette encoche dans chaque alternance au cours du passage du résonateur oscillant dans la zone de couplage susmentionnée, l'axe longitudinal de l'aimant oblong étant sensiblement confondu avec l'axe de référence lorsque le résonateur est dans sa position de repos.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 est un schéma-bloc d'un mode de réalisation général d'un mouvement horloger mécanique selon l'invention ;
- La Figure 2 montre, en vue de dessus, partiellement un mode de réalisation particulier d'un mouvement horloger mécanique selon l'invention ;
- La Figure 3 est une vue en coupe partielle, selon la ligne III-III, du mouvement horloger de la Figure 2 ; et
- Les Figures 4A, 4B, 4C et 4D montrent quatre positions successives du système de couplage magnétique entre un volant de balancier et un arrêtoir prévu dans le mode de réalisation de la Figure 2.

### Description détaillée de l'invention

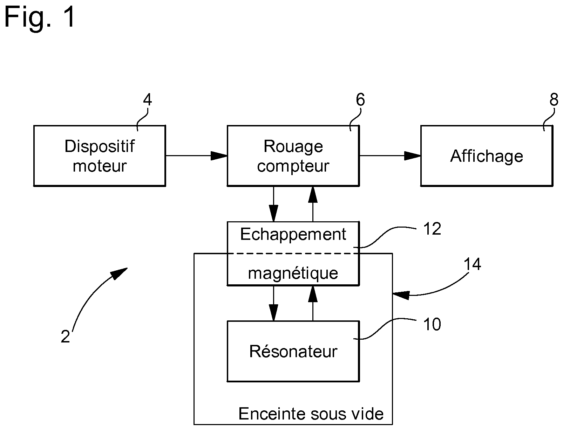

A la Figure 1 est représenté de manière schématique au moyen d'un schéma-bloc un mode de réalisation général d'un mouvement mécanique selon l'invention. Ce mouvement mécanique 2 comprend un dispositif moteur mécanique 4, par exemple un barillet à remontage manuel ou à remontage automatique, un rouage compteur 6 entraîné par le dispositif moteur et un affichage analogique 8 d'au moins une information temporelle entraîné par le rouage compteur de manière connue. Le mouvement 2 comprend également un dispositif régulateur de sa marche formé par un résonateur 10 et selon l'invention un échappement magnétique 12 comprenant un système de couplage magnétique sans contact. Le résonateur 10 et une partie de l'échappement magnétique sont logés dans une enceinte 14 fermée hermétiquement où règne une pression réduite relativement à la pression atmosphérique. Dans ce mode de réalisation général, le dispositif moteur, le rouage compteur et le dispositif d'affichage sont situés hors de l'enceinte 14. Cette enceinte comprend une paroi qui passe au travers de l'échappement magnétique et plus précisément de son système de couplage magnétique sans contact, c'est-à-dire entre des éléments magnétiques de ce système engendrant ledit couplage magnétique sans contact, tout en garantissant le fonctionnement de l'échappement magnétique, à savoir l'entretien de l'oscillation du résonateur 10 et le comptage de ses oscillations pour permettre un cadencement du rouage compteur. Selon une caractéristique particulière, la paroi de l'enceinte 14 est amagnétique au moins dans une région où est situé le système magnétique.

Dans une variante particulière, il est prévu un type de résonateur comprenant un balancier ayant un arbre formé au moins partiellement par un matériau magnétique et pivotant sensiblement sans frottement mécanique entre deux paliers magnétiques. Dans une autre variante particulière, le résonateur est formé par un volant de balancier et des lames flexibles qui relient ce volant à l'enceinte, ces lames flexibles étant agencées pour permettre au balancier d'avoir une oscillation avec une fréquence déterminée. Une réalisation de ce type sera exposée par la suite.

Le mouvement horloger mécanique selon l'invention comprend un résonateur et une roue d'échappement qui sont couplées par un organe intermédiaire non solidaire du résonateur ou de la roue d'échappement et oscillant de manière synchrone avec le résonateur. De manière générale, l'organe intermédiaire a une première partie directement couplée au résonateur et une deuxième partie, distincte de la première partie, qui est directement couplée à la roue d'échappement.

Selon une variante préférée, aucun mobile pivotant avec un frottement mécanique dans des paliers n'est compris dans l'enceinte. On peut ainsi éviter tout besoin de lubrification dans cette enceinte. Dans une variante, l'arbre du balancier est formé au moins partiellement par un matériau magnétique et il pivote sensiblement sans frottement mécanique entre deux paliers magnétiques. De même, l'organe intermédiaire a un arbre formé au moins partiellement par un matériau magnétique et pivotant sensiblement sans frottement mécanique entre deux paliers magnétiques. A titre d'alternative pour l'organe intermédiaire, ce dernier est relié par des lames flexibles à l'enceinte, ces lames flexibles étant agencées pour permettre l'oscillation synchrone de cet organe intermédiaire avec le résonateur.

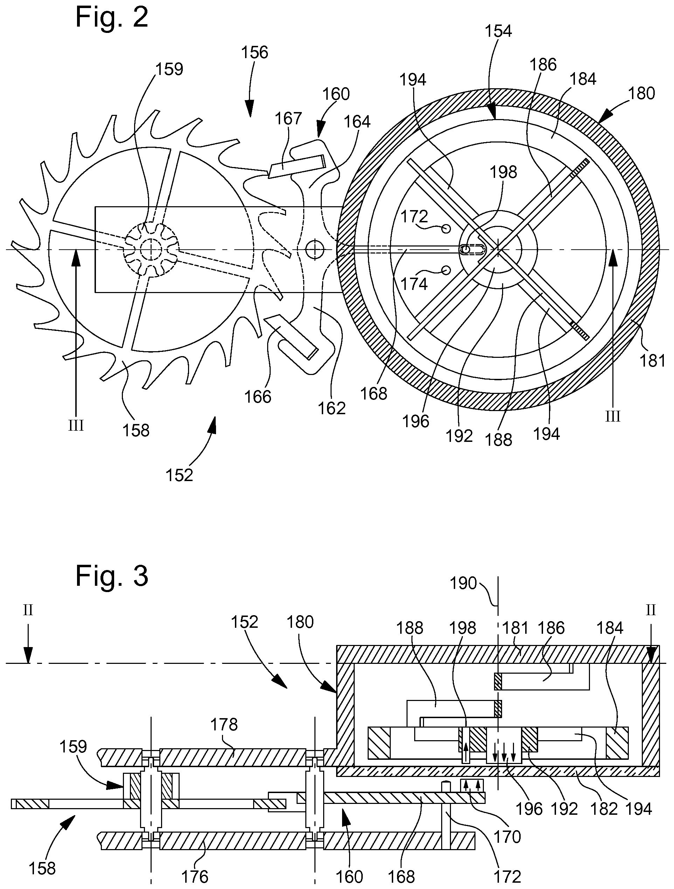

Un mode de réalisation particulier d'un mouvement horloger selon l'invention est décrit ci-après en référence aux Figures 2, 3 et 4A à 4D. Le mouvement horloger mécanique 152 comprend un résonateur 154 et un échappement magnétique 156 représentés aux figures. Cet échappement magnétique comprend une roue d'échappement 158 qui est couplée au résonateur par un organe intermédiaire 160 formé par une ancre définissant un arrêtoir bistable. Ce mode de réalisation particulier est remarquable en ce qu'un système de couplage magnétique de l'échappement magnétique est prévu entre l'ancre 160 et le résonateur. La roue d'échappement et l'ancre sont montées sur deux arbres respectifs qui sont pivotés dans des paliers mécaniques usuels entre une platine 176 et un pont 178 qui est venu de matière avec la boîte 181. Dans une variante, l'ancre a un arbre magnétique pivoté entre deux paliers magnétiques pour réduire les frottements sur cette ancre. Un pignon d'échappement 159 est monté classiquement sur l'arbre de la roue d'échappement.

Le résonateur est formé par un volant 184 de balancier et des lames flexibles 186 et 188 fixées à ce volant, ces lames flexibles étant agencées pour permettre au balancier d'avoir une oscillation sensiblement autour d'un axe géométrique 190 avec une fréquence déterminée. Dans la variante représentée, ces lames flexibles sont agencées en croix, c'est-à-dire qu'elles sont décalées de 90°. Chaque lame flexible est fixée par une première extrémité au fond de la boîte 181, formant l'enceinte 180 fermée hermétiquement, et par une deuxième extrémité, diamétralement opposée à la première extrémité, au volant 184 du balancier. Ainsi le balancier n'est pas pivoté et aucun palier n'est prévu dans l'enceinte 180. Le réglage de la fréquence d'oscillation d'un tel résonateur peut se faire au niveau des lames flexibles par un traitement thermique ou une ablation de matière à l'aide d'un faisceau laser, et au niveau de l'inertie du volant du balancier par ablation de matière également avec un laser. On notera qu'au moins un réglage terminal peut être prévu une fois l'enceinte 180 fermée de manière étanche à l'air et présentant une pression réduite.

Le mode de réalisation particulier décrit ci-avant est remarquable par le fait qu'il propose un échappement magnétique en partie identique à un échappement à ancre suisse classique et que le système de couplage magnétique est agencé de manière que cet échappement magnétique ait un fonctionnement cinématique similaire à celui de l'échappement à ancre suisse. Ainsi, la roue d'échappement est classique et les deux bras 162 et 164 de l'ancre, portant respectivement deux palettes 166 et 167, couplés mécaniquement à cette roue d'échappement sont aussi classiques. Dans la variante représentée, le système de couplage magnétique entre l'ancre et le volant de balancier 184 a été conçu pour obtenir une commande de l'ancre 160 par le balancier et une génération des impulsions d'entretien de l'oscillation de ce balancier similaires à l'échappement à ancre suisse. A cet effet, l'ancre comprend une baguette 168 qui porte à son extrémité un aimant oblong 170 situé à l'extérieur de l'enceinte 180, en face d'une paroi amagnétique 182 de cette enceinte. Cet aimant oblong forme une première partie du système de couplage magnétique. Il exerce deux fonctions de l'ancre en remplaçant la fourchette et le dard d'une ancre classique. Le volant 184 du balancier comprend en son centre un disque 192 relié au volant par quatre bras 194 et portant la seconde partie du système de couplage magnétique située à l'intérieur de l'enceinte. Cette seconde partie comprend une cheville magnétique 198 formée par un aimant, agencé en attraction relativement à l'aimant de l'ancre et inséré dans un trou du disque 192 qui correspond au grand plateau d'un échappement classique, et un disque aimanté central 196 aimanté en répulsion relativement à l'aimant de l'ancre et présentant une encoche 200. Ce disque aimanté central remplace le petit plateau d'un échappement classique.

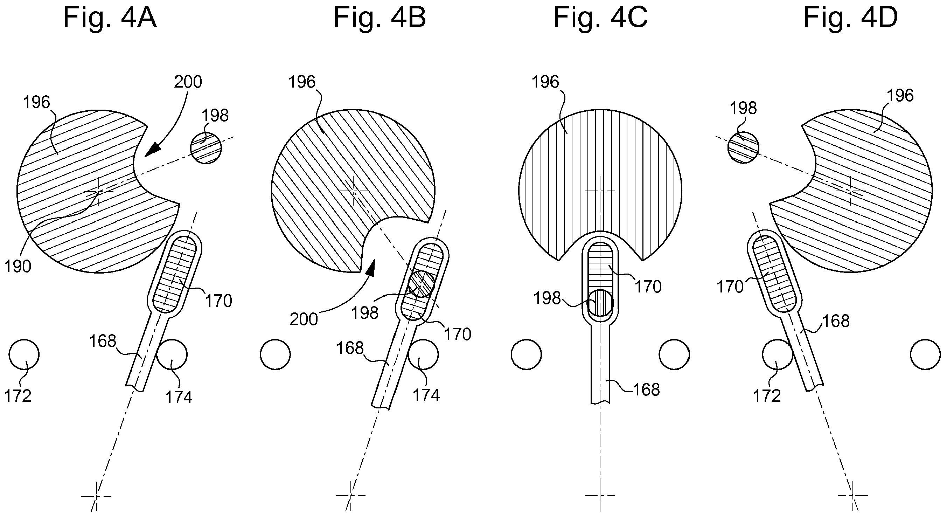

Le fonctionnement du système de couplage magnétique est représenté aux Figures 4A à 4D. Ce système est agencé pour permettre une oscillation de l'ancre de manière synchrone avec le résonateur entre deux positions d'arrêt stables de cette ancre dans lesquelles elle est maintenue alternativement durant une partie de chaque alternance de l'oscillation du résonateur. Ces deux positions d'arrêt stables sont définies par deux goupilles 172 et 174 limitant la course angulaire de la baguette 168 et contre lesquelles cette baguette vient alternativement s'appuyer durant un certain intervalle de temps dans chaque alternance du balancier sous l'effet de la répulsion du disque aimanté 196. La Figure 4A montre l'ancre dans une première position stable où elle est momentanément arrêtée et le balancier proche de son amplitude maximale. La cheville magnétique 198 et l'encoche 200 dans le disque aimanté central 196 sont situés angulairement hors de la zone de couplage avec l'aimant oblong 170 fixé sur la baguette 168 de l'ancre. La baguette est maintenue contre la goupille 174 par une force magnétique due à l'interaction magnétique entre le disque aimanté et la cheville aimantée, lesquels sont montés en répulsion magnétique.

Lorsque le volant du balancier tourne en direction de sa position de repos, correspondant sur la Figures 4A-4D au demi-axe vertical partant de l'axe de rotation 90 vers le bas, la cheville aimantée est premièrement attirée par l'aimant 170 jusqu'à une position représentée à la Figure 4B où l'encoche 200 est alors située en face de cet aimant 170. Dans une première période du couplage magnétique utile, le balancier poursuit sa rotation sensiblement jusqu'à la position de repos, montrée à la Figure 4C, en entraînant avec lui l'aimant 170 qui pénètre ainsi partiellement dans l'encoche. Ceci engendre une rotation de l'ancre jusqu'à un dégagement de la palette de l'ancre contre laquelle butait une dent de la roue d'échappement. Cette dent exerce alors de manière classique un couple sur l'ancre et l'aimant 170 est ainsi entraîné en rotation par la roue d'échappement. L'aimant 170 devient alors, dans une seconde période du couplage magnétique utile, l'élément moteur dans l'interaction entre cet aimant et la cheville aimantée; ce qui permet de fournir une impulsion d'entretien de l'oscillation du balancier, ce dernier continuant ensuite sa rotation jusqu'à une amplitude maximale, correspondant environ à la Figure 4D, alors que la baguette 168 est maintenue en appui contre la goupille 172. Une même interaction a lieu dans chaque alternance de l'oscillation du résonateur 154.

## Revendications

1. Mouvement horloger mécanique (152) comprenant un résonateur (154), un échappement associé à ce résonateur et un affichage d'au moins une information temporelle, cet affichage étant entraîné par un dispositif moteur mécanique via un rouage compteur dont la marche est cadencée par l'échappement qui comprend une roue d'échappement (158) et un arrêtoir (160) ; **caractérisé en ce que** cet arrêtoir a une première partie (170) qui est couplée au résonateur via un système de couplage magnétique et une deuxième partie (166, 167), distincte de la première partie, qui est couplée à la roue d'échappement, le système de couplage magnétique étant formé d'un premier élément magnétique (170) porté par ladite première partie de l'arrêtoir et d'un deuxième élément magnétique (198) porté par le résonateur; et **en ce que** les premier et deuxième éléments magnétiques sont agencés pour présenter entre eux au moins périodiquement une interaction magnétique en attraction lorsque le résonateur oscille, ledit système de couplage magnétique étant agencé pour permettre une oscillation de l'arrêtoir (160) de manière synchrone avec le résonateur entre deux positions d'arrêt dans lesquelles cet arrêtoir est maintenu alternativement durant respectivement une première partie et une deuxième partie de chaque alternance de l'oscillation du résonateur.

2. Mouvement horloger mécanique selon la revendication 1, **caractérisé en ce que** ledit deuxième élément magnétique est formé par une cheville magnétique agencée de manière décentrée relativement à un axe géométrique d'oscillation (190) du résonateur.

3. Mouvement horloger mécanique selon la revendication 2, **caractérisé en ce que** ledit premier élément magnétique présente, dans un plan général perpendiculaire audit axe géométrique d'oscillation, une forme oblongue configurée pour permettre, dans chaque alternance de ladite oscillation du résonateur, ladite interaction magnétique en attraction dans une zone de couplage magnétique située autour d'une position de repos du résonateur.

4. Mouvement horloger mécanique selon la revendication 3, **caractérisé en ce que** le premier élément magnétique est formé par un aimant oblong.

5. Mouvement horloger mécanique selon la revendication 4, **caractérisé en ce que** ledit résonateur comprend en outre un disque central qui est aimanté en répulsion relativement audit aimant formant le premier élément magnétique, ce disque central aimanté étant agencé de manière à maintenir par la répulsion magnétique prévue l'arrêtoir alternativement dans ses deux positions d'arrêt ; et **en ce que** le disque central aimanté présente à sa périphérie une encoche (200) qui est sensiblement alignée sur un axe de référence passant par le centre de ladite cheville magnétique et ledit axe géométrique d'oscillation, l'encoche permettant audit aimant oblong de pénétrer, dans chaque alternance, au moins partiellement dans cette encoche au cours du passage du résonateur oscillant dans ladite zone de couplage, l'axe longitudinal de l'aimant oblong étant sensiblement confondu avec ledit axe de référence lorsque le résonateur est dans sa position de repos.

6. Mouvement horloger mécanique selon l'une quelconque des revendications précédentes, **caractérisé en ce que** ledit résonateur comprend un balancier avec un arbre formé au moins partiellement par un matériau magnétique et pivotant sensiblement sans frottement mécanique entre deux paliers magnétiques.

7. Mouvement horloger mécanique selon l'une quelconque des revendications 1 à 5, **caractérisé en ce que** ledit résonateur est formé par un volant de balancier monté sur des lames flexibles, ces lames flexibles étant agencées pour permettre au balancier d'avoir une oscillation avec une fréquence déterminée.
